Europäisches Patentamt

European Patent Office

Office européen des brevets

(11) Numéro de publication: **0 274 331**
**B1**

# (12) FASCICULE DE BREVET EUROPÉEN

(45) Date de publication du fascicule du brevet:
05.09.90

(21) Numéro de dépôt: **87420326.8**

(22) Date de dépôt: **01.12.87**

(51) Int. Cl.⁵: **B60N 2/22**

(54) **Articulation continue pour siège de véhicule à rattrapage automatique des jeux.**

(30) Priorité: **03.12.86 FR 8616917**

(43) Date de publication de la demande:
**13.07.88 Bulletin 88/28**

(45) Mention de la délivrance du brevet:
**05.09.90 Bulletin 90/36**

(84) Etats contractants désignés:
**AT BE CH DE ES FR GB GR IT LI LU NL SE**

(56) Documents cités:
**EP-A- 0 099 549**
**FR-A- 2 038 595**
**FR-A- 2 038 803**
**FR-A- 2 412 438**
**FR-A- 2 529 062**

(73) Titulaire: **TUBAUTO Société dite:, 6, rue Paul-Vaillant Couturier, F-92307 Levallois-Perret(FR)**

(72) Inventeur: **Caillol, André, 4 Square Jean-Paul Laurens, F-75016 Paris(FR)**

(74) Mandataire: **Desoineux, Jean-Paul Charles, 130 rue de Silly BP 413, F-92103 Boulogne-Billancourt Cédex(FR)**

ACTORUM AG

## Description

La présente invention a pour objet une articulation continue comportant un excentrique de commande, articulation qui est surtout utilisée pour le réglage de l'inclinaison du dossier d'un siège de véhicule mais qui peut également être utilisée pour des rehausses de l'assise du siège (réglage en hauteur et en inclinaison de l'assise du siège) ainsi que pour d'autres utilisations afin d'obtenir, par exemple, des sièges couchettes très confortables.

On connaît déjà, depuis longtemps, des articulations continues à excentrique (voir en particulier le FR-A 1 590 551 qui correspond au préambule de la revendication 1) qui sont constituées par un flasque fixe solidaire de l'assise du siège, ce flasque se terminant à sa partie supérieure par un élargissement semi-circulaire comportant intérieurement une denture qui coopère avec un satellite à denture simple ou à denture double de façon qu'une partie au moins de ce satellite engrène avec la denture intérieure d'un flasque mobile solidaire du dossier pour permettre, lors de la rotation d'un excentrique ou came, la rotation du satellite sur la denture interne du flasque fixe en créant ainsi un entraînement en rotation de la denture du flasque mobile. Dans certains cas, la denture du flasque fixe et la denture du flasque mobile ont une différence d'une dent provoquant ainsi un déplacement angulaire d'une dent par tour de rotation du satellite entraîné par l'excentrique.

Ces dispositifs ont l'inconvénient de présenter des jeux importants, en partie seulement nécessaires au fonctionnement, mais qui sont aussi la conséquence des inévitables tolérances de fabrication. Ces jeux ont en particulier pour conséquence des battements de la partie supérieure du dossier qui ne font que s'aggraver au fur et à mesure de l'utilisation.

La demande de brevet EP 99549 décrit une articulation de siège à dossier réglable comportant deux flasques, reliés l'un à l'assise et l'autre au dossier du siège et articulés l'un par rapport à l'autre au moyen d'un axe de basculement muni d'un excentrique. L'un des flasques est monté en rotation autour de cet axe et comporte une couronne dentée intérieurement, de révolution par rapport à celui-ci. L'autre flasque comporte une denture extérieure, de diamètre inférieur, logée à l'intérieur de la première, qui tourne en engrènement partiel avec celle-ci au moyen de l'excentrique. Un élément de tension, constitué par un anneau ou un demi-anneau en matière compressible élastique est disposé entre l'excentrique et la portée de la pièce qui supporte la denture intérieure. Cet anneau est disposé de façon à exercer une pression élastique uniquement en direction de la zone d'engrènement partiel des deux dentures grâce à la forme du logement annulaire dans lequel il est placé. Pour cela le logement annulaire comporte une section accrue du côté opposé à celui de la zone d'engrènement partiel.

Un tel dispositif présent d'une part l'inconvénient de mettre en œuvre une matière compressible élastique, c'est-à-dire un élastomère, dont les caractéristiques de compressibilité et de retour élastique s'affaiblissent en fonction du temps. De plus les élastomères ont des coefficients de frottement médiocres ce qui accroît les efforts nécessaires pour actionner le moyen de réglage et contribue à une usure rapide de l'élément de tension.

Le brevet FR 2 038 803 publié le 8.01.71 décrit un mécanisme de débrayage d'une articulation de réglage d'inclinaison d'un dossier de véhicule. Ce mécanisme comprend un satellite dont les deux dentures engrènent simultanément sur deux couronnes dentées. Ce satellite est monté libre en rotation, grâce à une ouverture centrale, sur la portée circulaire excentrée d'un porte-satellite, calé angulairement, mais libre de coulisser axialement. Les jeux existant entre la portée circulaire du porte-satellite et la paroi de l'ouverture centrale du satellite sont rattrapés par deux branches élastiques du porte-satellite. Ces branches élastiques sont sollicitées en expansion radiale par un ressort logé dans un espace ménagé entre elles de façon que leurs protubérances d'extrémité viennent en appui élastique contre la paroi de l'ouverture centrale du satellite rattrapant ainsi les jeux existants.

Il y a lieu d'observer que dans un tel dispositif la pression exercée par les branches élastiques du porte-satellite sur la paroi de l'ouverture centrale du satellite entraîne un accroissement de la pression exercée par la paroi de l'ouverture centrale sur celle du porte-satellite du côté diamétralement opposé à celui où se trouvent les branches élastiques. Il en résulte qu'il ne peut y avoir de déplacement radial notable du satellite en direction de la zone d'engrènement que si la matière du porte-satellite est en un matériau facilement déformable et compressible, sous l'action d'un ressort, tel qu'un élastomère. Nous avons vu plus haut les inconvénients des élastomères pour de telles applications.

De façon beaucoup plus générale, on a constaté qu'une source particulière d'instabilité de l'articulation d'un siège comportant un moyen de réglage par excentrique est l'usure progressive des portées autour desquelles pivote celui-ci. Cette usure est en particulier une cause importante de battement du dossier par rapport à l'assise.

Le brevet EP 0 121 452 concerne un organe de verrouillage d'un dossier de siège pour véhicule. Cet organe comporte une ferrure solidaire du dossier, articulée autour d'un axe et munie d'un secteur denté. Un grain comportant une denture apte à s'engager dans celle du secteur denté est apte à se déplacer le long d'une glissière sous l'action d'un moyen de commande de façon que les deux dentures viennent engrener l'une dans l'autre. Un moyen de blocage latéral assure le blocage du grain et donc le blocage en rotation du dossier. Ce moyen permet ainsi de rattraper les jeux latéraux du grain. De plus, l'axe autour duquel est articulé le dossier, en général solidaire d'une ferrure fixe, prend appui en deux points distincts d'un palier ovalisé. Ainsi est assuré un blocage angulaire certain du dossier par rapport à l'assise. Suivant un autre mode de réalisation l'axe d'articulation peut comporter un méplat permettant un appui en deux points sur un palier circulaire.

On a recherché la possibilité de réaliser une articulation continue pour siège de véhicule, à commande par excentrique qui, pour une position quelconque de réglage et sans faire appel à un dispositif de blocage particulier, permette le rattrapage des jeux dûs aux tolérances de fabrication et permette ainsi d'éviter les inconvénients de l'usure des portées autour desquelles pivote l'excentrique.

L'articulation continue pour siège à dossier réglable, avec commande par excentrique, qui fait l'objet de l'invention, permet d'atteindre ces objectifs.

Cette articulation comporte un flasque fixe, solidaire de l'assise du siège et un flasque mobile solidaire du dossier. Un excentrique formant came, pourvu d'un support en rotation autour d'un axe comprenant un arbre logé dans un alésage, permet de faire varier la position angulaire de l'un des deux flasques par rapport à l'autre par engrènement partiel d'au moins deux dentures de révolution, l'une solidaire de l'un des deux flasques étant centrée sur l'axe autour duquel tourne l'excentrique formant came et l'autre étant solidaire d'une pièce entraînée par l'excentrique formant came, de façon à déplacer autour de l'axe la zone d'engrènement partiel. L'excentrique formant came comporte suivant l'invention à sa périphérie, dans la zone la plus excentrée par rapport à l'axe, un coussinet élastique, en métal ou alliage métallique, solidaire de cet excentrique formant came qui est en appui direct ou indirect contre la paroi de révolution de la pièce entraînée par l'excentrique de façon à maintenir en appui la denture solidaire de cette pièce contre l'autre denture dans la zone d'engrènement partiel; de plus, au niveau de l'excentrique formant came, celui des deux composants, arbre ou alésage, du support en rotation de cet excentrique qui est solidaire de celui-ci comporte deux zones d'appui privilégiées formant relief vis-à-vis de la surface de l'autre composant , ces deux zones d'appui étant à une distance angulaire d'environ 90 à 150° l'une de l'autre et étant disposées de part et d'autre du plan qui contient l'axe du support en rotation de l'excentrique et qui passe par la zone d'engrènement partiel des deux dentures.

De préférence la périphérie de l'excentrique formant came comporte un évidement qui s'étend sur une zone angulaire d'environ 120 à 200° autour de l'axe de rotation et qui traverse la zone la plus excentrée de cet excentrique formant came ; dans cet évidement est logé le coussinet élastique et les bords d'extrémité de cet évidement sont disposés de façon à empêcher les déplacements angulaires du coussinet élastique.

De préférence également le coussinet élastique est recourbé de façon à venir en appui contre le fond de l'évidement en deux zones situées de part et d'autre de sa région médiane, région dans laquelle il s'écarte au contraire de ce fond et vient en appui élastique, de façon directe ou indirecte, par exemple selon au moins une ligne ou selon une surface, contre la paroi de révolution de la pièce entraînée par l'excentrique formant came.

De façon avantageuse, le composant du support en rotation de l'excentrique formant came qui est solidaire de celui-ci est un arbre comportant un méplat dont les bords de raccordement à la surface cylindrique constituent deux zones d'appui privilégiées formant relief, situées à une distance angulaire de 90 à 150° l'une de l'autre.

Le composant du support en rotation de l'excentrique formant came qui est solidaire de celui-ci peut aussi être un alésage de forme ovoïde dont le profil est tel qu'un arbre logé à l'intérieur prend appui sur cet alésage par deux zones d'appui privilégiées, formant relief, situées à une distance angulaire de 90 à 150° l'une de l'autre.

Pour faciliter la rotation de l'excentrique formant came on peut disposer autour de celui-ci un roulement à billes qui s'interpose entre le coussinet élastique et la paroi de révolution entraînée par l'excentrique formant came. De préférence, la cage du roulement à billes est au contact du coussinet élastique.

Suivant un mode particulier de réalisation de l'articulation suivant l'invention, la pièce entraînée par l'excentrique formant came est un satellite comportant deux dentures dont l'une engrène partiellement avec une denture solidaire du flasque fixe et l'autre avec une denture solidaire du flasque mobile.

Suivant un autre mode de réalisation le satellite comporte une seule denture qui engrène partiellement à la fois avec une denture solidaire du flasque fixe et avec une denture solidaire du flasque mobile portant un nombre de dents différent du nombre de dents de la denture du flasque fixe.

Un autre mode de réalisation de l'articulation suivant l'invention consiste en ce que la pièce entraînée par l'excentrique formant came fait partie intégrante de l'un des deux flasques de l'articulation, une denture solidaire de cette pièce engrenant partiellement avec une denture correspondante solidaire de l'autre flasque.

Enfin il est aussi possible, suivant l'invention, de mettre en oeuvre une pièce entraînée par l'excentrique formant came qui est un satellite comportant une seule denture laquelle engrène sur une seule denture de l'un des deux flasques, l'autre flasque étant entraîné par le satellite grâce à une liaison comportant des tétons engagés avec jeu dans des trous.

De nombreux métaux ou alliages métalliques peuvent être utilisés pour réaliser le coussinet élastique suivant l'invention. On peut utiliser en particulier des métaux ou alliages métalliques ayant à la fois de bonnes propriétés élastiques et un faible coefficient de frottement, en particulier dans le cas où le coussinet est en contact direct avec la paroi de la pièce qui est entraînée par l'excentrique formant came.

Les exemples et les figures ci-après font connaître, de façon non limitative plusieurs modes de réalisation de l'articulation continue pour siège suivant l'invention.

La figure 1 est une vue schématique en élévation faisant apparaître la zone comprenant l'excentrique en forme de came d'une articulation suivant l'invention.

La figure 2 est une vue en coupe schématique suivant un plan diamétral tel que A-A de la fig.1 d'une articulation suivant l'invention.

La figure 3 est une vue en coupe schématique suivant un plan diamétral d'une articulation suivant l'invention qui est une variante de celle des figures 1 et 2.

La figure 4 est une vue en coupe schématique d'une articulation suivant l'invention sans satellite.

La figure 5 est une vue en coupe schématique en élévation d'une articulation du type de la fig.1 avec roulement à billes.

La figure 6 est une vue en coupe schématique suivant un plan diamétral de l'articulation avec satellite de la figure 5.

La figure 7 est une vue en coupe schématique suivant un plan diamétral d'une articulation du type de la figure 3 avec roulement à billes.

La figure 8 est une vue en coupe schématique suivant un plan diamétral d'une articulation du type de la figure 4 avec roulement à billes.

Les figures 9 et 10 représentent de façon schématique un autre mode particulier de réalisation de l'articulation suivant l'invention en élévation et aussi de côté et en coupe.

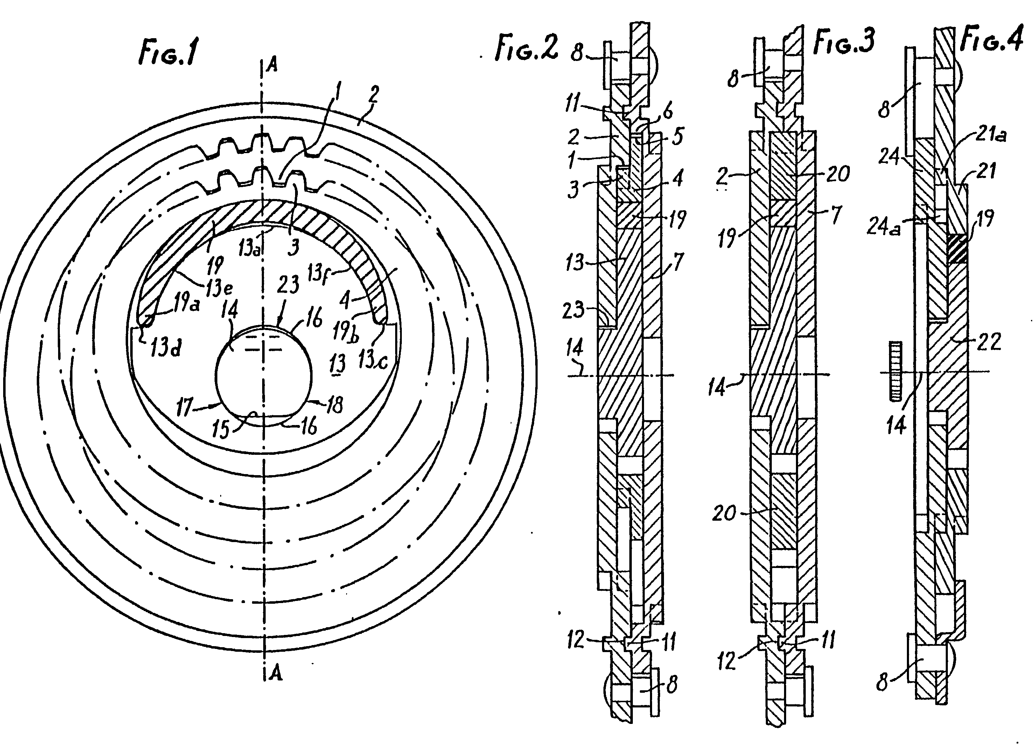

Les figures 1 et 2 montrent, de façon schématique, un premier mode de réalisation de l'articulation continue pour siège à dossier réglable suivant l'invention. La figure 1 montre de face la zone de forme générale circulaire de cette articulation, une ouverture étant pratiquée dans le flasque 2 de façon à faire apparaître l'excentrique en forme de came 13 ainsi que le coussinet élastique 19 et le satellite double 4.

La figure 2 montre clairement les composants essentiels de l'articulation et la façon dont ils sont reliés les uns aux autres. Leurs prolongements qui se raccordent aux composants du siège, assise et dossier, ne sont pas montrés car bien connus de l'homme de métier.

A la fig. 1 est indiquée également, de façon très schématique, la denture intérieure 1 du flasque mobile 2 dans sa zone d'engrènement partiel avec la denture 3 du satellite 4 ainsi que la denture intérieure 6 du flasque 7 dans sa zone d'engrènement partiel avec la denture 5 du satellite 4.

Comme cela est normal pour ce genre d'articulation, des guides ou pions 8 assurent le maintien du flasque fixe 7 contre le flasque mobile 2 et le centrage du mouvement de rotation de l'un par rapport à l'autre est assuré par une couronne circulaire 11 du flasque fixe 7 pénétrant dans un évidement circulaire 12 du flasque mobile 2.

De façon connue, le mouvement d'entraînement du satellite 4 est assuré par un excentrique formant came 13 qui affecte sensiblement la forme d'un coeur ; cet excentrique 13 est solidaire d'un arbre de rotation 14 présentant un méplat 15 de façon à porter sur la paroi de l'alésage 16 du flasque mobile 2 en deux zones d'appui privilégiées 17, 18 qui sont, dans le cas de la figure, disposées sensiblement à 120° l'un de l'autre.

La zone supérieure 13a de l'excentrique formant came 13 présente un évidement suivant sensiblement un demi-cercle, occupé par un coussinet élastique 19 dont les extrémités amincies 19a, 19b sont limitées en déplacement par les parties en redent 13c-13d de l'excentrique 13 et prennent appui sur les zones 13e, 13f de l'excentrique.

Comme on le voit aux figures 1 et 2 l'arbre de rotation 14 a une section centrale qui laisse dans la zone diamétralement opposée aux points 17, 18 un léger jeu 23.

Le coussinet élastique 19 ne s'applique pas sur la zone supérieure 13a de l'excentrique formant came 13 mais s'écarte de celle-ci et exerce une pression répartie ici sur une surface contre la paroi de l'alésage formant portée de révolution du satellite 4 qui entoure l'excentrique formant came 13 (voir figure 1).

L'articulation ainsi décrite fonctionne de la façon suivante : en entraînant en rotation au moyen de l'arbre 14 l'excentrique formant came 13 celui-ci entraîne à son tour le satellite 4 dont les dentures 3 et 5, excentrées par rapport à cet arbre 14, engrènent partiellement avec les dentures 1 et 6 ; grâce à des rapports différents de nombre de dents entre les dentures en prise un décalage angulaire se produit entre les flasques 2 et 7. Comme le montrent les figures 1, 5 et 9 les zones d'appui privilégiées formant reliefs telles que 17-18, 37a - 37b se trouvent de part et d'autre du plan passant par l'axe du support en rotation de l'excentrique et par les zones d'engrènement partiel des dentures. La force de pression exercée par le coussinet élastique, de façon directe ou indirecte, sur la paroi de l'alésage de la pièce 4, 25, 44 entraînée par l'excentrique formant came est ainsi parfaitement épaulée par les zones d'appui privilégiées. On compense ainsi très aisément les jeux des dentures qui engrènent partiellement ainsi que les jeux des autres pièces et ainsi que l'usure des arbres et des alésages sur lesquels ils reposent. On évite ainsi les à-coups et les battements du siège pendant le réglage de l'inclinaison du dossier et aussi lorsqu'il s'agit d'un siège de véhicule, les à-coups résultant des accélérations ou décélérations de celui-ci. On obtient ainsi un excellent confort pour l'utilisateur du siège.

Comme le montre la fig. 3, l'articulation dans ce cas comporte un satellite 20 à une seule denture engrenant sur la denture intérieure du flasque mobile 2 et du flasque fixe 7. Cette réalisation est également fort connue et le fonctionnement de cette articulation est identique puisque cette réalisation ne diffère de la réalisation de la fig. 2 que par le fait que le satellite 20 comporte une seule denture. On obtient, grâce au coussinet élastique 19 et également à l'arbre de rotation central 14, la même compensation des jeux que celle expliquée ci-devant.

Finalement, à la fig. 4, il s'agit d'une réalisation dans laquelle le flasque mobile 21, sous l'action de l'excentrique formant came 22 engrène directement, de façon partielle, par sa denture intérieure 21a sur la denture 24a du flasque fixe 24. Comme dans les cas précédents l'excentrique formant came 22 comporte un coussinet élastique 19 qui exerce une pression élastique sur l'alésage formant portée de révolution du flasque mobile 21. L'arbre 14 solidaire de l'excentrique formant came 22 comporte deux zones d'appui privilégiées qui équilibrent la pression exercée par le coussinet élastique 19 et assurent le rattrapage automatique des jeux.

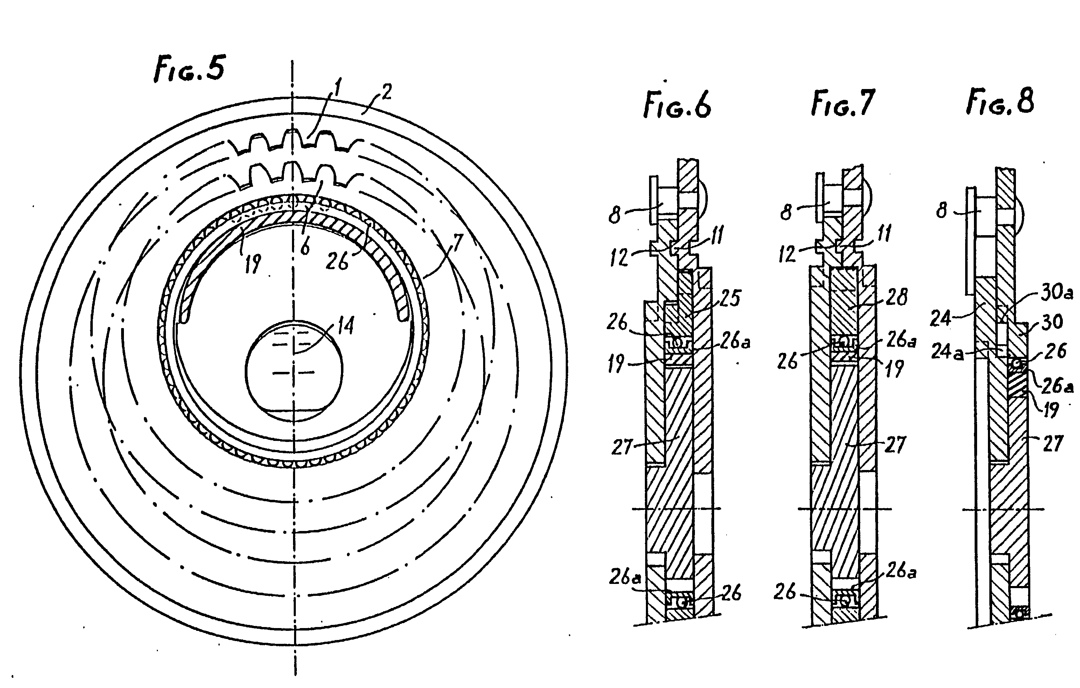

Si on examine avec soin la fig. 5, on s'aperçoit que le flasque mobile 2, qui comporte la denture intérieure 1 et le flasque fixe 7 qui comporte la denture intérieure 6, coopèrent avec le satellite à double denture 25 (fig. 6), mais lorsque celui-ci tourne sous l'action de l'arbre central 14, il roule sur un roulement à billes 26 interposé entre l'excentrique formant came 27 et ce satellite.

De ce fait, le coussinet élastique 19 est placé sous le roulement à billes 26 contre la cage interne 26a du roulement 26. On obtient ainsi les mêmes compensations des jeux que précédemment décrites pour les autres réalisations.

La fig. 7 de la réalisation du mécanisme de l'articulation montre un satellite à une seule denture 28 et cette réalisation est identique à celle de la fig. 3 mais avec l'inclusion du roulement à billes 26 au même endroit que dans le cas précédent.

Finalement, à la fig. 8 le flasque mobile 30 dont la denture intérieure 30a roule sur la denture extérieure 24a du flasque fixe 24 se déplace sur le roulement à billes 26. Le coussinet élastique 19 est placé sous le roulement à billes 26 sur la partie en coeur de la came 27. Le fonctionnement est identique à celui décrit pour la fig. 4.

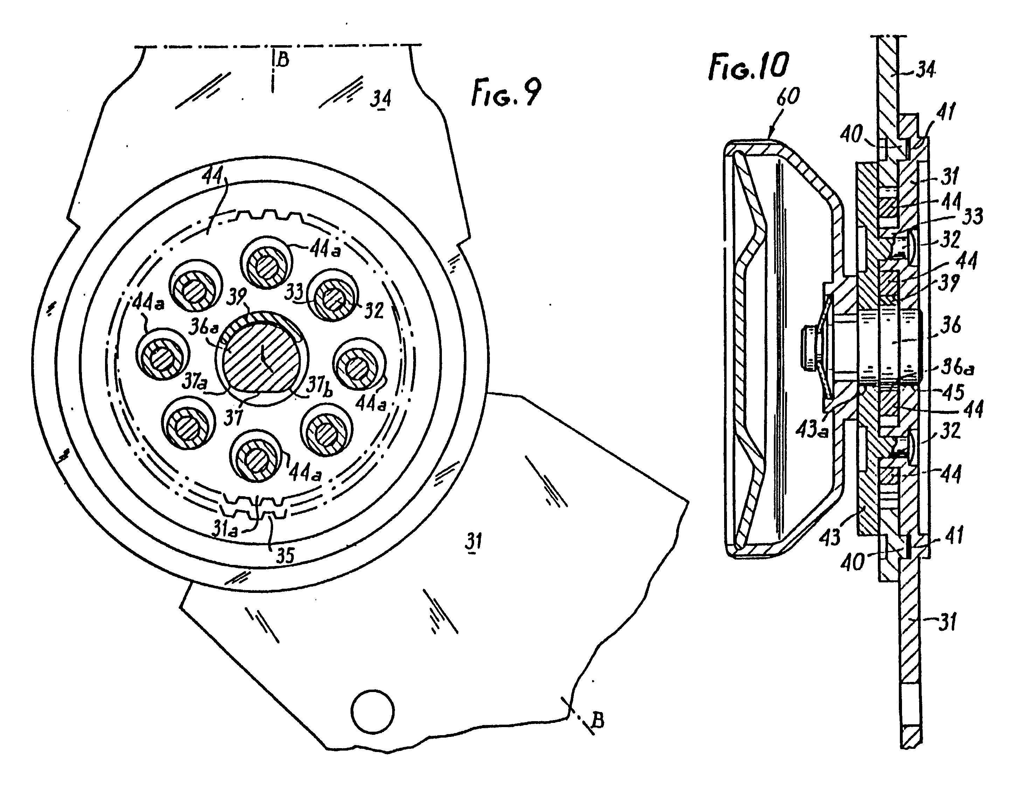

On voit figures 9 et 10 un mode de réalisation de l'articulation suivant l'invention dans lequel un flasque fixe 31 porte, dans sa zone circulaire, des tétons creux 33 à l'intérieur desquels sont sertis des tétons pleins 32 solidaires d'une contre-plaque 43 dont le rôle est d'assurer le maintien latéral du flasque mobile 34 et l'emprisonnement du satellite 44. Le flasque mobile 34 porte une denture intérieure 35 sur laquelle engrène partiellement la denture 31a du satellite 44. Ce dernier possède des ouvertures circulaires 44a coopèrent avec les tétons 33 du flasque fixe 31. Un excentrique formant came 36, dont l'arbre de rotation central possède un méplat 37 et des bords 37a et 37b, tourillonne sur les paliers 43a et 45 de la contre-plaque 43 et du flasque fixe 31. Les bords 37a et 37b forment ainsi deux zones d'appui privilégiées disposées sensiblement à 120° l'un de l'autre de cet arbre dans les paliers 43a et 45. Un coussinet élastique 39 très schématiquement représenté permet de rattraper les jeux des différentes pièces de l'articulation comme cela a été décrit précédemment. Le centrage du flasque mobile 34 par rapport au flasque fixe 31 est réalisé par une couronne circulaire 40 portée par le flasque mobile et pénétrant dans une rainure circulaire 41 du flasque fixe. L'entraînement en rotation de l'arbre de l'excentrique 36 au moyen d'un bouton de manoeuvre 60 peut ainsi s'effectuer sans jeu avec tous les avantages sus-décrits.

Comme on peut le voir, par la description qui précède, le coussinet élastique 19 ou 39 est fixe par rapport à la zone d'engrènement des différentes dentures quelle que soit la position angulaire de l'excentrique considéré par rapport aux flasques fixe et mobile.

Comme cela a été dit dans la description générale de l'invention de nombreux métaux ou alliages peuvent être utilisés pour réaliser le coussinet élastique suivant l'invention. Lorsqu'on n'utilise pas de roulement à billes entre le coussinet et la paroi de révolution entraînée par l'excentrique en came il est souhaitable de faire appel à un métal ou alliage ayant à la fois de bonnes propriétés d'élasticité et un faible coefficient de frottement. On peut aussi améliorer le coefficient de frottement si cela est souhaitable par des traitements de surface appropriés. On peut aussi effectuer une lubrification convenable.

Il y a lieu d'indiquer que la bague 26a des roulements à billes est pratiquement fixe par rapport au coussinet élastique considéré.

Dans tous les cas, il est possible grâce au coussinet élastique 19 ou 39 de rattraper les tolérances de fabrication du fait que l'excentrique formant came a une excentration plus forte d'une certaine valeur $\Delta$ e, en général égale à la moitié d'un intervalle de tolérance, que la valeur nominale e qui serait normalement liée à la géométrie des dentures si on n'avait pas prévu de coussinet élastique entre l'excentrique formant came et la paroi de révolution qu'il entraîne.

Au moment de l'étude, la géométrie de l'excentrique formant came est réalisée pour permettre un déplacement radial de la pièce qu'il entraîne suivant l'axe vertical du mécanisme de plus ou moins la moitié des intervalles de tolérances concernés par l'engrènement ce qui donne plus ou moins $\Delta$ e tout en maintenant un jeu latéral minimum j par rapport à l'axe vertical de l'articulation, j est le jeu minimum pour permettre le mouvement en rotation de l'excentrique formant came sans blocage complet du mécanisme.

Comme cela a été dit dans la description générale de l'invention l'alésage du support en rotation de l'excentrique formant came peut être solidaire de celui-ci. Il doit alors comporter les deux zones d'appui privilégiées qui viennent en appui contre la portée de révolution d'un arbre. Cet alésage peut en particulier présenter une forme ovoïde étudiée pour venir en appui contre la portée de l'arbre en deux zones d'appui privilégiées situées à une distance angulaire de 90° à 150° environ. Dans tous les cas ces zones d'appui doivent être disposées de façon à équilibrer la pression exercée par l'excentrique, par l'intermédiaire du coussinet élastique, sur la pièce qu'il entraîne de façon à permettre l'engrènement partiel d'au moins deux dentures avec un minimum de jeu.

De très nombreuses modifications ou adaptations de l'articulation continue qui fait l'objet de l'invention peuvent être réalisées qui ne sortent pas du domaine de l'invention selon les caractéristiques de la revendication 1.

## Revendications

1) Articulation continue pour siège à dossier réglable comportant un flasque fixe solidaire de l'assise du siège et un flasque mobile solidaire du dossier, un excentrique formant came, pourvu d'un support en rotation autour d'un axe comprenant un arbre logé dans un alésage, permettant de faire varier la position angulaire de l'un des deux flasques par rapport à l'autre, par engrènement partiel d'au moins deux dentures de révolution, l'une solidaire de l'un des deux flasques, étant centrée sur l'axe autour duquel tourne l'excentrique formant came et l'autre étant solidaire d'une pièce entraînée par l'excentrique formant came, de façon à déplacer autour de l'axe la zone d'engrènement partiel caractérisée en ce que l'excentrique formant came (13, 22, 27, 36) comporte à sa périphérie, dans la zone la plus excentrée par rapport à l'axe, un coussinet élastique (19, 39) en métal ou alliage métallique, solidaire de cet excentrique formant came qui est en appui élastique direct ou indirect contre la paroi de révolution de la pièce (4, 20, 21, 25, 28, 30, 44) entraînée par cet excentrique formant came, de façon à maintenir en appui la denture (3, 5) solidaire de cette pièce, contre l'autre denture (1, 6), dans la zone d'engrènement partiel et en ce que celui des deux composants, arbre (14) ou alésage (23), du support en rotation de l'excentrique formant came qui est solidaire de celui-ci comporte deux zones d'appui privilégiées (17-18, 37a-37b), formant relief vis-à-vis de la surface de l'autre composant, ces deux zones d'appui étant à une distance angulaire d'environ 90 à 150° l'une de l'autre et étant disposées de part et d'autre du plan qui contient l'axe du support en rotation de l'excentrique et passe par la zone d'engrènement partiel des deux dentures.

2) Articulation continue suivant revendication 1 caractérisée en ce que l'excentrique formant came comporte à sa périphérie un évidement qui s'étend sur une zone angulaire de 120 à 200° autour de l'axe de rotation et qui traverse la zone la plus excentrée de cet excentrique formant came, évidement dans lequel est logé le coussinet élastique (19), les bords d'extrémité de cet évidement 13c, 13d empêchant les déplacements angulaires du coussinet élastique.

3) Articulation suivant revendication 1 ou 2 caractérisée en ce que le coussinet élastique est recourbé de façon à venir en appui contre le fond de l'évidement en deux zones (13e, 13f) situées de part et d'autre de sa région médiane, région dans laquelle il s'écarte au contraire de ce fond et vient en appui élastique, de façon directe ou indirecte contre la paroi de révolution (4, 25) de la pièce entraînée par l'excentrique formant came.

4) Articulation suivant l'une des revendications 1 à 3 caractérisée en ce que le composant du support en rotation de l'excentrique formant came qui est solidaire de celui-ci est un arbre (14) comportant un méplat (15) dont les bords de raccordement à la surface cylindrique constituent deux zones d'appui privilégiées (17-18, 37a-37b) formant relief, situées à une distance angulaire de 90 à 150° l'une de l'autre.

5) Articulation suivant l'une des revendications 1 à 3 caractérisée en ce que le composant du support en rotation de l'excentrique formant came qui est solidaire de celui-ci est un alésage de forme ovoïde dont le profil est tel qu'un arbre logé à l'intérieur prend appui sur cet alésage par deux zones d'appui privilégiées formant relief situées à une distance angulaire de 90 à 150° l'une de l'autre.

6) Articulation suivant l'une des revendications 1 à 5 caractérisée en ce qu'un roulement à billes (26) est interposé entre le coussinet élastique (19) et la paroi de révolution de la pièce (25) entraînée par l'excentrique formant came.

7) Articulation suivant l'une des revendications 1 à 6 caractérisée en ce que la pièce entraînée par l'excentrique formant came est un satellite (25) comportant deux dentures dont l'une engrène partiellement avec une denture (6) solidaire du flasque fixe (7) et l'autre avec une denture (1) solidaire du flasque mobile (2).

8) Articulation suivant l'une des revendications 1 à 6 caractérisée en ce que la pièce, entraînée par l'excentrique formant came, est un satellite (20) comportant une seule denture qui engrène partiellement à la fois avec une denture solidaire du flasque fixe (7) et une denture solidaire du flasque mobile (2).

9) Articulation suivant l'une des revendications 1 à 6 cractérisée en ce que la pièce (21) entraînée par l'excentrique formant came (22) fait partie intégrante de l'un des deux flasques de l'articulation et en ce que la denture (21a) solidaire de cette pièce engrène partiellement avec la denture (24a) correspondante solidaire de l'autre flasque (24).

10) Articulation suivant l'une des revendications 1 à 6 caractérisée en ce que la pièce (44) entraînée par l'excentrique formant came est un satellite comportant une seule denture qui engrène sur une seule denture de l'un des deux flasques (34), l'autre flasque (31) étant entraîné par le satellite grâce à une liaison comportant des tétons (33) engagés avec jeu dans des trous (44 a).

## Claims

1. A continuous pivotal connection for a seat with an adjustable back portion comprising a fixed plate which is fixed with respect to the seat portion of the seat and a movable plate which is fixed with respect to the back portion, an eccentric provided with a support for rotary movement about an axis comprising a shaft housed in a bore, permitting the angular position of one of the two plates to be varied relative to the other, by partial meshing of at least two tooth configurations of revolution, one which is fixed with respect to one of the two plates being cetred on the axis about which the eccentric rotates and the other being fixed with respect to a portion which is entrained by the eccentric, so as to displace the partial meshing zone about the axis, characterised in that the eccentric forms a cam (13, 22, 27, 36) and at its periphery in the zone which is most eccentric with respect to the axis, comprises a resilient bearing member (19, 39) of metal or metal alloy and fixed with respect to said cam-forming eccentric which is held in resilient direct or indirect contact against the face of revolution of the portion (4, 20, 21, 25, 28, 30, 44) entrained by said cam-forming eccentric, in such a way as to hold the tooth configuration (3, 5) which is fixed with respect to said portion against the other tooth configuration (1, 6) in the partial meshing zone, and that that one of the two components, shaft (14) or bore (23), of the support for rotatably supporting the cam-forming eccentric which ist fixed with respect thereto comprises two privileged contact zones (17–18, 37 to 37a–37b) forming a raised configuration with respect to the surface of the other component, said two contact zones being at an angular spacing of about 90 to 150° from each other and being disposed on respective sides of the plane which contains the axis of the support for rotatably supporting the eccentric and passes through the partial meshing zone of the two tooth configurations.

2. A continuous pivot connection according to claim 1 characterised in that the cam-forming eccentric comprises at its periphery a recess which extends over an angular zone of 120 to 200° about the axis of rotation and which passes through the most eccentric zone of said cam-forming eccentric, the resilient bearing member (19) being accommodated in said recess and the end edges of said recess (13c, 13d) preventing angular movements of the resilient bearing member.

3. A pivot connection according to claim 1 or claim 2 characterised in that the resilient bearing member is curved in such a way as to bear against the bottom of the recess in two zones (13e, 13f) disposed on respective sides of the central region thereof in which in contrast it is away from said bottom and is in direct or indirect resilient contact against the face (4, 25) of revolution of the portion entrained by the cam-forming eccentric.

4. A pivot connection according to one of claims 1 to 3 characterised in that the component of the support for rotatably supporting the cam-forming eccentric which is fixed with respect thereto is a shaft (14) comprising a flat (15) whose edges which connect to the cylindrical surface form two privileged contact zones (17–18, 37a–37b) forming a raised configuration, said zones being disposed at an angular spacing of 90 to 150° from each other.

5. A pivot connection according to one of claims 1 to 3 characterised in that the component of the support for rotatably supporting the cam-forming eccentric which is fixed with respect thereto is a bore of ovoid shape whose profile is such that a shaft accommodated in its interior bears against said bore by way of two privileged contact zones forming a raised configuration, which are disposed at an angular spacing of 90 to 150° from each other.

6. A pivot connection according to one of claims 1 to 5 characterised in that a ball bearing assembly (26) is interposed between the resilient bearing member (19) and the face of revolution of the portion (25) which is entrained by the cam-forming eccentric.

7. A pivot connection according to one of claims 1 to 6 characterised in that the portion which is entrained by the cam-forming eccentric is a planet wheel (25) comprising two tooth configurations of which one partially meshes with a tooth configuration (6) which is fixed with respect to the fixed plate (7) while the other meshes with a tooth configuration (1) which is fixed with respect to the movable plate (2).

8. A pivot connection according to one of claims 1 to 6 characterised in that the portion entrained by the cam-forming eccentric is a planet wheel (20) comprising a single tooth configuration which partially meshes both with a tooth configuration which is fixed with respect to the fixed plate (7) and a tooth configuration which is fixed with respect to the movable plate (2).

9. A pivot connection according to one of claims 1 to 6 characterised in that the portion (21) entrained by the cam-forming eccentric (22) is an integral part of one of the two plates of the connection and that the tooth configuration (21a) which is fixed with respect to said portion partially meshes with the corresponding tooth configuration (24a) which is fixed with respect to the other plate (24).

10. A pivot connection according to one of claims 1 to 6 characterised in that the portion (44) which is entrained by the cam-forming eccentric is a planet wheel comprising a single tooth configuration which meshes with a single tooth configuration of one of the two plates (34), the other plate (31) being entrained by the planet wheel by virtue of a connection comprising projections (33) engaged with play into holes (44a).

**Patentansprüche**

1. Kontinuierliches Gelenk für Sitze mit einstellbaren Lehnen mit einem festen Schenkel, der mit dem Sockel des Sitzes verbunden ist sowie einem beweglichen Schenkel, der an der Lehne befestigt ist, mit einem Exzenter, der mit einer Stütze versehen ist, die sich um eine Achse drehen kann, diese Stütze umfaßt eine Welle, die sich in einer Bohrung befindet und eine Veränderung der Winkellagen des einen Schenkels in bezug auf den anderen durch teilweises Ineinandergreifen zumindest zweier umlaufender Verzahnungen erlaubt, wovon die eine an dem einen der beiden Schenkel befestigt ist und bezüglich der Achse zentriert ist, um die sich der Exzenter dreht und die andere ist an einem von dem Exzenter mitgenommenen Stück befestigt, so daß der Bereich des teilweisen Ineinandergreifens um die Achse herum verschoben wird, dadurch gekennzeichnet, daß der Exzenter Nocken (13, 22, 27, 36) aufweist und an seinem Rand in dem Bereich, der am weitesten von der Achse entfernt ist, ein elastisches Lager (19, 39) aus Metall oder eine metallische Legierung aufweist, das an dem Nocken aufweisenden Exzenter befestigt ist und das die drehende Wandung des von dem Nocken aufweisenden Exzenter mitgenommenen Teiles (4, 20, 21, 25, 28, 30, 44) elastisch direkt oder indirekt stützt, so daß es die an diesem Teil befestigte Verzahnung (3, 5) gegen die andere Verzahnung (1, 6) in dem Bereich teilweisen Ineinandergreifens andrückt; dadurch, daß dasjenige der beiden den Exzenter bei seiner Drehung stützenden Bauteile, Welle (14) oder Bohrung (23), das mit diesem befestigt ist, zwei bestimmte Stützbereiche (17–18, 37–37a–37b) aufweist, die eine Erhöhung gegenüber der Oberfläche des anderen Bauteiles formen, wobei die zwei Stützbereiche voneinander einen Winkelabstand von ungefähr 90 bis 150° haben und die zu beiden Seiten der Ebene angebracht sind, die die Achse der sich drehenden Stütze des Exzenters beim Drehen und die den Bereich des teilweisen Ineinandergreifens der beiden Verzahnungen durchläuft.

2. Kontinuierliches Gelenk nach Anspruch 1, dadurch gekennzeichnet, daß der Nocken aufweisende Exzenter auf seinem Umfang eine Vertiefung aufweist, die sich in einem Winkelbereich von 120 bis 200° um die Rotationsachse herum erstreckt und die den am weitesten vom Mittelpunkt entfernten Bereich dieses Nocken aufweisenden Exzenters überdeckt, wobei in der Vertiefung das elastische Lager (19) angebracht ist und wobei die Flanken dieser Vertiefung 13c, 13d die Winkelverschiebung des elastischen Lagers verhindern.

3. Gelenk nach Anspruch 1 oder 2, dadurch gekennzeichnet, daß das elastische Lager so gekrümmt ist, daß es von dem Boden der Vertiefung in zwei Bereichen (13e, 13f) gestützt wird, die zu beiden Seiten eines mittleren Bereichs liegen, wobei das elastische Lager sich in diesem Bereich vom Boden abhebt und entweder direkt oder indirekt die drehende Wandung des Teiles stützt, das von dem Nocken aufweisenden Exzenter mitgenommen wird.

4. Gelenk nach einem der Ansprüche 1 bis 3, dadurch gekennzeichnet, daß das Bauteil, das den Nocken aufweisenden Exzenter während der Drehung stützt und das mit diesem verbunden ist, eine Welle (14) mit einer Abflachung (15) ist, deren Verbindungsflächen auf der zylindrischen Oberfläche zwei bestimmte Stützbereiche (17–18, 37a–37b) bilden, die Erhöhungen formen, die voneinander einen Winkelabstand zwischen 90 und 150° haben.

5. Gelenk nach einem der Ansprüche 1 bis 3, dadurch gekennzeichnet, daß das Bauteil das Nocken aufweisende Exzenter bei der Drehung stützt und das mit ihm verbunden ist, eine eiförmige Bohrung ist, deren Querschnitt dem einer darin befindlichen Welle entspricht, wobei die Welle in dieser Bohrung durch zwei bestimmte Stützzonen gestützt wird, die Erhöhungen formen und einen Winkelabstand voneinander zwischen 90 und 150° aufweisen.

6. Gelenk nach einem der Ansprüche 1 bis 5, dadurch gekennzeichnet, daß zwischen dem elastischen Lager (19) und der drehenden Seitenwand des von dem Nocken aufweisende Exzenter mitgenommenen Teiles (25) ein Kugellager (26) angebracht ist.

7. Gelenk nach einem der Ansprüche 1 bis 6, dadurch gekennzeichnet, daß das Teil, das von dem Nocken aufweisenden Exzenter mitgenommen wird, ein Planetenrad (25) ist, das zwei Verzahnungen aufweist, wovon die eine teilweise in eine an dem festen Schenkel (7) befestigten Verzahnung (6) eingreift und die andere in eine Verzahnung (1), die an dem beweglichen Schenkel (2) befestigt ist.

8. Gelenk nach einem der Ansprüche 1 bis 6, dadurch gekennzeichnet, daß das Teil, das von dem Nocken aufweisenden Exzenter mitgenommen wird, ein Planetenrad (20) mit lediglich einer Verzahnung ist, die teilweise gleichzeitig in die an dem festen Schenkel (7) befestigte Verzahnung und eine an dem beweglichen Schenkel (2) befestigte Verzahnung eingreift.

9. Gelenk nach einem der Ansprüche 1 bis 6, dadurch gekennzeichnet, daß das Teil (21), das von dem Nocken (22) aufweisenden Exzenter mitgenommen wird, ein wesentlicher Bestandteil des einen der beiden Schenkel des Gelenkes ist und daß die Verzahnung (21a), die an diesem Teil befestigt ist, teilweise in die entsprechende, an dem anderen Schenkel befestigte Verzahnung (24a) eingreift.

10. Gelenk nach einem der Ansprüche 1 bis 6, dadurch gekennzeichnet, daß das Teil (44), das von dem Nocken aufweisenden Exzenter mitgenommen wird, ein Planetenrad mit nur einer Verzahnung ist, die in nur eine Verzahnung des einen der beiden Schenkel (34) eingreift, der andere Schenkel (31) wird von dem Planetenrad mittels einer Verbindung mitgenommen, bei der Kuppen (33) mit Spiel in Öffnungen (44a) eingreifen.

Fig.1

Fig.2

Fig.3

Fig.4

EP 0 274 331 B1

Fig.5

Fig.6    Fig.7    Fig.8

EP 0 274 331 B1

Fig. 9

Fig. 10

EP 0 274 331 B1